# EUROPÄISCHE PATENTSCHRIFT

(11) **EP 3 360 305 B1**
(45) Veröffentlichungstag und Bekanntmachung des Hinweises auf die Patenterteilung: **03.06.2020**
(21) Anmeldenummer: 16782203.0
(22) Anmeldetag: 10.10.2016
(51) Int. Cl.: H04L 29/06

(54) **VERFAHREN, VORRICHTUNG UND NETZWERK ZUR DATENÜBERTRAGUNG**
METHOD, DEVICE, AND NETWORK FOR TRANSFERRING DATA
PROCÉDÉ, DISPOSITIF ET RÉSEAU DE TRANSMISSION DE DONNÉES

(30) Priorität: 09.10.2015 DE 102015219648
(43) Veröffentlichungstag der Anmeldung: 15.08.2018
(73) Patentinhaber: Laird Bochum GmbH, 44807 Bochum (DE)
(72) Erfinder: LUCIONI, Gonzalo, 58454 Witten (DE); DORNBUSCH, Guido, 48683 Ahaus (DE)
(74) Vertreter: Patentanwälte Bressel und Partner mbB
(86) Internationale Anmeldenummer: PCT/EP2016/074130
(87) Internationale Veröffentlichungsnummer: WO 2017/060508

(56) Entgegenhaltungen:
- WO-A1-2012/174355
- US-A1- 2014 106 709

## Beschreibung

Die Erfindung betrifft eine Vorrichtung, ein Verfahren und ein Netzwerk zur Datenübertragung von und zu mindestens einem Endgerät.

Aus dem Stand der Technik ist das sogenannte Wi-Fi Calling bekannt. Dies ermöglicht Wi-Fi-Calling-fähigen Endgeräten, unter ihrer Mobilfunknummer über ein beliebiges Wi-Fi-Netz zu telefonieren. Auch wird ermöglicht, dass weitere Mobilfunkdienste, z.B. das Versenden/Empfangen von SMS/MMS, über das Wi-Fi-Netz ermöglicht wird. Auch ergänzende Dienste wie z.B. ein Anklopfen, eine Konferenzschaltung usw. können ermöglicht werden.

Das Dokument Ericsson Review, "Wi-Fi calling-extending the reach of VoLTE to Wi-Fi", 30. Januar 2015 offenbart ein IMS-basiertes Sprach- und Videokommunikationssystem über LTE. Weiter wird darin die Entwicklung der Sprach- und Videoübertragung über Wi-Fi beschrieben. In dem Dokument wird z.B. beschrieben, dass Datenpakete zwischen einem Endgerät und einem EPC (Evolved Packet Core) übertragen. Diese Datenübertragung kann verschlüsselt und getunnelt erfolgen. Das EPC bezeichnet das Kernnetz, insbesondere das LTE-Kernnetz, eines Mobilfunkanbieters bzw. die Architektur dieses Kernnetzes. Das EPC bzw. dessen Architekturermöglicht den Betrieb und die Koordination verschiedener Funknetzwerke und gewährleistet so u.a. Mobilität, Handover und Roaming. Hierbei erfolgt keine Auswertung der Daten auf dem Übertragungsweg zwischen dem Endgerät und dem EPC.

Es können jedoch Umgebungen existieren, in denen neben dem Endgerät weitere Einrichtungen vorhanden sind, die zur Ausgabe, Eingabe oder Verarbeitung der übertragenen Daten geeignet sind. In einem Fahrzeug kann z.B. eine Freisprecheinrichtung vorhanden sein, die zur Ausgabe von Audiosignalen basierend auf den übertragenen Daten und zur Eingabe von Audiosignalen dient. Auch können im Fahrzeug Einrichtungen zur Anzeige von SMS/MMS, beispielsweise ein Display eines Infotainmentsystems, vorhanden sein.

Die US 2014/106709 A1 offenbart ein Verfahren, welches es ermöglicht, dass eine Mobilstation hochqualitative Sprach- und Multimediaservices über ein LTE Netzwerk empfängt.

Die WO 2012/174355 A1 offenbart ein Verfahren und eine Vorrichtung zum Bereitstellen von Inhaltsobjekten oder Multimedia-Services zu einer drahtlosen Sende-/Empfangseinheit, die in eine besuchtes Netzwerk roamt.

Es stellt sich das technische Problem, eine Vorrichtung, ein Verfahren und ein Netzwerk zur Datenübertragung von und zu mindestens einem Endgerät zu schaffen, welche eine verbesserte Nutzung von Funktionalitäten mehrerer Endgeräte in einer bestimmten Umgebung ermöglichen.

Die Lösung des technischen Problems ergibt sich durch die Gegenstände mit den Merkmalen der Ansprüche 1, 10 und 15. Weitere vorteilhafte Ausgestaltungen der Erfindung ergeben sich aus den Unteransprüchen.

Vorgeschlagen wird eine Vorrichtung zur Datenübertragung von und zu mindestens einem Endgerät. Die Vorrichtung kann selbstverständlich zur Datenübertragung von und zu mehreren Endgeräten dienen. Die Datenübertragung zwischen dem Endgerät und der Vorrichtung kann eine drahtlose Datenübertragung sein, insbesondere eine Datenübertragung über ein WLAN (Wireless Local Area Network) oder über LTE-U (LTE unlicensed). Es ist jedoch auch möglich, dass die Datenübertragung zwischen der Vorrichtung und einem Endgerät eine drahtgebundene Datenübertragung ist, beispielsweise über ein Kommunikationssystem wie z.B. ein Bussystem. Die Vorrichtung ist somit derart ausgebildet, dass zumindest eine drahtlose Datenübertragung von und/oder zu einem Endgerät ermöglicht wird. Zusätzlich kann auch eine drahtgebundene Dateiübertragung ermöglicht werden. Die Vorrichtung kann auch als sogenannte wNode bezeichnet werden.

Die Vorrichtung umfasst mindestens eine Einrichtung zur Bereitstellung eines Endgeräte-Funknetzwerks. Das Endgeräte-Funknetzwerk dient zur Datenübertragung zwischen dem Endgerät und der Vorrichtung. Das Endgeräte-Funknetzwerk kann insbesondere in einem unlizenzierten Frequenzbereich betrieben werden. Das Endgeräte-Funknetzwerk kann vorzugsweise ein WLAN-Funknetzwerk sein. Alternativ oder kumulativ ist es möglich, dass das Endgeräte-Funknetzwerk ein LTE-U-Funknetzwerk ist.

Die Einrichtung zur Bereitstellung kann hierbei einen drahtlosen Zugangspunkt (wireless access point) bzw. dessen Funktionalitäten bereitstellen. Die Einrichtung zur Bereitstellung des WLAN-Funknetzes kann hierzu mindestens ein Antennenelement und eine Sende-/Empfangseinrichtung umfassen.

Weiter umfasst die Vorrichtung mindestens eine Einrichtung zur Datenübertragung zu mindestens einer externen Einrichtung. Die externe Einrichtung ist hierbei von dem Endgerät verschieden. Insbesondere dient die Einrichtung zur Datenübertragung der Datenübertragung zu einem externen Netzwerk. In diesem Fall kann die externe Einrichtung beispielsweise ein Server sein. Diese Einrichtung ist von der Einrichtung zur Bereitstellung eines WLAN-Funknetzes verschieden.

Die Datenübertragung zwischen der Vorrichtung und der externen Einrichtung kann vorzugsweise eine drahtlose Datenübertragung sein. In diesem Fall kann die Einrichtung zur Datenübertragung z.B. als Funkmodem ausgebildet sein. Allerdings ist es auch möglich, dass die Datenübertragung zwischen der Vorrichtung und der externen Einrichtung eine drahtgebundene Datenübertragung ist. In diesem Fall kann die Einrichtung zur Datenübertragung beispielsweise ein DSL-Modem sein. Die Vorrichtung ist somit derart ausgebildet, dass eine drahtlose und/oder drahtgebundene Datenübertragung zu der externen Einrichtung ermöglicht wird.

Selbstverständlich kann die Vorrichtung mehrere Einrichtungen zur Datenübertragung zu mindestens einer externen Einrichtung oder zu mehreren externen Einrichtungen umfassen. Weiter kann die Vorrichtung im Fall einer drahtlosen Datenübertragung zu der externen Einrichtung ein oder mehrere SIM umfassen, beispielsweise eine oder mehrere SIM-Karte/n. Ein SIM kann ein so genanntes Teilnehmer-Identitätsmodul bezeichnen. Dieses kann mittels eines Zugangsdatensatzes, welches z.B. in der SIM gespeichert ist, einen abgesicherten Zugang zu einem der SIM zugeordneten Mobilfunknetzwerk ermöglichen. Ein SIM kann auch mehrere Zugangsdatensätze umfassen, die einen Zugang zu mehreren Mobilfunknetzwerk ermöglichen.

Umfasst die Vorrichtung mehrere Einrichtungen zur Datenübertragung zu einer externen Einrichtung, so können jeder dieser Einrichtungen voneinander verschiedene SIM oder Zugangsdatensätze zugeordnet sein. Alternativ kann eine Einrichtung zur Datenübertragung mit verschiedenen SIM oder verschiedenen Zugangsdatensätzen betrieben werden.

Dies ermöglicht die Datenübertragung über Netzwerke von verschiedenen Mobilfunkanbietern.

Die Einrichtung zur Datenübertragung zu mindestens einer externen Einrichtung kann hierbei mindestens eine Schnittstelle zur Datenübertragung aufweisen. Insbesondere kann die Einrichtung zur Datenübertragung zu mindestens einer externen Einrichtung über die Schnittstelle mit mindestens einem Antennenelement verbunden werden/sein. Wie nachfolgend noch näher erläutert, kann das Antennenelement ein Antennenelement eines Fahrzeugs sein.

Somit können Daten, insbesondere in Form von Datenpaketen, zwischen einem Endgerät und der vorgeschlagenen Vorrichtung über das Endgeräte-Funknetzwerk übertragen werden. Weiter können Daten, insbesondere ebenfalls in Form von Datenpaketen, zwischen der Vorrichtung und einer externen Einrichtung, insbesondere einem externen Netzwerk, über die mindestens eine Einrichtung zur Datenübertragung übertragen werden.

Weiter umfasst die Vorrichtung mindestens eine Steuer- und Auswerteeinrichtung. Diese kann insbesondere als Mikrocontroller ausgebildet sein oder mindestens einen Mikrocontroller umfassen. Die mindestens eine Steuer- und Auswerteeinrichtung ist als IMS-Controller (IP Multimedia Subsystem Controller) ausgebildet.

Ein IMS bezeichnet ein Telekommunikationssystem, welches einen standardisierten Zugriff auf Dienste verschiedener Netzwerke ermöglicht. Eine Architektur und Funktionen des IMS sind insbesondere durch das 3GPP-Gremium spezifiziert (3rd Generation Partnerchip Projekt Gremium). Eine entsprechende Architektur ist insbesondere in den Dokumenten 3gpp TS 23.402, ab Release 12, Version 12.8.0, verfügbar seit 19.03.2015 und 3gpp TS 24.302, ab Release 12, Version 12.10.0, verfügbar seit 25.09.2015 beschrieben. Insbesondere ermöglicht das IMS eine datentechnische Verbindung von IP-basierten Netzwerken mit nicht IP-basierten Netzwerken, beispielsweise mit Mobilfunknetzen nach einem GSM-, UMTS- oder LTE-Standard.

Die Datenübertragung über das IMS, insbesondere die Datenübertragung über das bereitgestellte Endgeräte-Funknetzwerk, erfolgt gemäß dem sogenannten SIP (Session Initiation Protocol). Dieses dient zum Aufbau, zur Steuerung und zum Abbau einer Kommunikationssitzung (Datenübertragungssitzung) zwischen zwei und mehr Teilnehmern. Die Datenübertragung zur Übertragung von Sprachdaten, insbesondere die paketbasierte Datenübertragung, kann gemäß dem RTP / RTCP erfolgen..

Die Datenübertragung kann somit insbesondere eine paketbasierte Datenübertragung sein. Ein Endgerät kann somit auch ein sogenannter SIP User Agent sein. Somit kann das Endgerät insbesondere ein SIP-fähiges Endgerät sein.

Insbesondere kann der IMS-Controller einen sogenannte SIP Proxy ausbilden bzw. die Funktionalitäten eines SIP Proxy bereitstellen. Funktionen eines SIP Proxy sind beispielsweise in dem Dokument IR.92, Version 9.0, 08.04.2015 beschrieben, welches von der GSM Association bereitgestellt wird. Auch kann der IMS-Controller als Router dienen.

Der IMS-Controller ermöglicht die Weiterleitung und/oder Verteilung von zu übertragenden Daten an ein gewünschtes Endgerät. Auch ermöglicht er die Durchführung der vorhergehend erläuterten Funktionen zum Aufbau, Steuern und Abbau einer Kommunikationssitzung sowie Anmeldung, Authentifizierung und Autorisierung eines Endgerätes für gewünschte Dienste.

Weiter kann der IMS-Controller Funktionen eines IMS bereitstellen bzw. durchführen. Vorzugsweise stellt der IMS-Controller nur ausgewählte und somit nicht alle Funktionen eines IMS bereit. In diesem Sinne kann bereitstellen bedeuten, dass die entsprechende Funktion durch den IMS-Controller durchführbar ist.

Die vorgeschlagene Vorrichtung kann insbesondere Teil einer sogenannten TCU (Telematics-Control-Unit) eines Fahrzeugs sein oder signal- und/oder datentechnisch mit einer solchen Einrichtung verbunden sein.

Die mindestens eine Steuer- und Auswerteeinrichtung kann hierbei signal- und/oder datentechnisch mit der Einrichtung zur Bereitstellung des Endgeräte-Funknetzwerkes und mit der mindestens einen Einrichtung zur Datenübertragung zu mindestens einer externen Einrichtung verbunden sein.

Durch die Steuer- und Auswerteeinrichtung kann über das Endgeräte-Funknetzwerk ein so genannter vertrauenswürdiger Zugang (trusted access) für ein Endgerät bereitgestellt werden. Der vertrauenswürdige Zugang kann insbesondere in Form einer S2a-Schnittstelle bereitgestellt werden. Hierzu kann die Steuer- und Auswerteeinrichtung entsprechende Funktionen ausführen. Entsprechende Funktionen sind insbesondere in den Dokumenten 3gpp TS 23.402, ab Release 12, Version 12.8.0, verfügbar seit 19.03.2015 beschrieben.

Weiter kann über das Endgeräte-Funknetzwerk ein Zugang zu einem EPC eines Mobilfunkanbieters bereitgestellt werden. Dieser Zugang kann entsprechend von Richtlinien bereitgestellt werden, die in dem Dokument IR.61, Version 10.0, 08.05.2015, welches von der GSM Association bereitgestellt wird, beschrieben sind.

Insgesamt kann durch die vorgeschlagene Vorrichtung ein Endgeräte-Funknetzwerk bereitgestellt werden, welches für ein Endgerät, insbesondere ein portables Endgerät wie z.B. ein Mobilfunktelefon oder ein Tablet, als sogenanntes Roaming-Netzwerk dienen kann. Das Endgeräte-Funknetzwerk ermöglicht somit die Übertragung von Daten für Wi-Fi-Calling. Wi-Fi-Calling kann eine Telefonie bezeichnen, wobei eine Datenübertragung zumindest teilweise über ein Wi-Fi-Netz, insbesondere das erläuterte Endgeräte-Funknetzwerk, erfolgt.

Im Sinne kann der Begriff Telefonie das Aufbauen, Steuern und Abbauen einer Verbindung zwischen zwei Endgeräten bezeichnen, die zur Übertragung von Daten für das Durchführen eines Sprach- und/oder Videotelefonats dient. Im Sinne dieser Erfindung umfasst Telefonie auch die Übertragung von Daten für das Durchführen weiterer Funktionen dienen, insbesondere Funktionen zur Nachrichtenübertragung, z.B. einer Übertragung von SMS/MMS, und Funktionen zur Bereitstellung von weiteren Telefoniediensten, z.B. einer Anklopffunktion oder einer Konferenzschaltungsfunktion. Die Übertragung der Daten kann hierbei über das bereitgestellte Endgeräte-Funknetzwerk erfolgen.

In vorteilhafter Weise ermöglicht die vorgeschlagene Vorrichtung zusätzlich die Einbindung mehrerer Endgeräte in die beim Wi-Fi Calling erfolgende Datenübertragung. Beispielsweise können, wie nachfolgend noch näher erläutert, Audiodaten, die im Rahmen eines Wi-Fi Calling an ein mobiles Endgerät, beispielsweise ein Mobilfunktelefon, übertragen werden sollen, zur Ausgabe an eine Freisprecheinrichtung übertragen werden. Dies kann durch den erläuterten IMS-Controller erfolgen.

Insbesondere erfolgt mittels der Vorrichtung also keine reine Weiterleitung von Datenpaketen zwischen dem Endgerät und einem externen Netzwerk. Vielmehr erfolgt durch den IMS-Controller u.a. eine Auswertung, gegebenenfalls eine Verarbeitung und gegebenenfalls eine gezielte Steuerung der übertragenen Signalisierungsdaten.

Es wird beschrieben, dass die Vorrichtung Teil, insbesondere Knoten, eines Netzwerks sein kann, welches auch als sogenanntes Zwischennetzwerk bezeichnet werden kann, wobei die Datenübertragung zwischen dem Endgerät und einem Zielnetzwerk, welches beispielsweise ein Heimnetzwerk eines Mobilfunkanbieters sein kann, über das Zwischennetzwerk erfolgt. Das Endgeräte-Funknetzwerk kann Teil dieses Zwischennetzwerks sein.

Das Zwischennetzwerk kann weitere Knoten umfassen, insbesondere auch ortsfest angeordnete Knoten. Weitere Knoten können beispielsweise als Server ausgebildet sein. Verschiedene Funktionen des Zwischennetzwerks können hierbei von verschiedenen Knoten ausgeführt werden.

So werden z.B. Daten von dem Endgerät über das Endgeräte-Funknetzwerk übertragen und dann von der Vorrichtung über einen weiteren Knoten des Zwischennetzwerks an das Heimnetzwerk des Mobilfunkanbieters übertragen. Die Datenübertragung zwischen der Vorrichtung und einem weiteren Knoten des Zwischennetzwerks kann auch über ein Netzwerk eines Mobilfunkanbieters erfolgen. Beispielsweise können Daten von der Vorrichtung zu einem weiteren Knoten von einem Funkmodem der Vorrichtung an eine Basisstation eines Mobilfunkanbieters übertragen werden. In diesem Fall wird das Netzwerk des Mobilfunkanbieters als Medium zur Datenübertragung genutzt.

Erfindungsgemäß stellt die Vorrichtung das Zwischennetzwerk bereit. In diesem Fall umfasst das Zwischennetzwerk neben der Vorrichtung keine weiteren Knoten. Alle Funktionen des Zwischennetzwerks werden in diesem Fall von der Vorrichtung ausgeführt. In diesem Fall kann das Zwischennetzwerk auch als Femto-Netzwerk bezeichnet werden. Im Falle eines Femto-Netzwerks werden alle Funktionen des Zwischennetzwerks von der vorgeschlagenen Vorrichtung durchgeführt. Diese kann somit auch alle zur Durchführung der Funktionen notwendigen Elemente umfassen.

Das Zwischennetzwerk bildet hierbei ein sogenanntes Roaming-Netzwerk. Hierzu sind selbstverständlich entsprechende Vereinbarungen zwischen einem Mobilfunkanbieter, der das Zielnetzwerk bereitstellt, und einem Betreiber des Zwischennetzwerks zu treffen. Das Zwischennetzwerk bildet hierbei ein IMS oder stellt dessen Funktionen, vorzugsweise jedoch nur einen Teil davon, bereit.

Ein Roaming-Netzwerk ermöglicht es hierbei, dass eine Auswertung, gegebenenfalls eine Verarbeitung und gegebenenfalls eine gezielte Steuerung, der zum oder von dem Endgerät übertragenen Daten anstatt in dem Heimnetzwerk des Mobilfunkanbieters oder zusätzlich zu der Auswertung und/oder Verarbeitung und/oder Steuerung in dem Heimnetzwerk in dem als Roaming-Netzwerk ausgebildeten Zwischennetzwerk erfolgen kann. Insbesondere können Telefonie-Funktionen, die von dem/für das Endgerät nutzbar sind, zumindest teilweise oder vollständig anstatt in dem Heimnetzwerk des Mobilfunkanbieters in dem als Roaming-Netzwerk ausgebildeten Zwischennetzwerk ausgeführt werden. Hierdurch sind Endgeräte auch außerhalb des Heimnetzwerks einsatzbereit.

Weiter ermöglicht die Vorrichtung in vorteilhafter Weise, dass Telefonie, die über ein Funknetzwerk eines Mobilfunkanbieters durchgeführt wird, in gewünschter Qualität auch in Bereichen mit keiner oder schwacher Verfügbarkeit dieses Funknetzwerks über das Endgeräte-Funknetzwerk bereitgestellt werden können. Wird die Vorrichtung im Fahrzeug eingesetzt, so können insbesondere im Fahrzeug angeordnete Endgeräte entsprechende Daten über das bereitgestellte Endgeräte-Funknetzwerk anstelle des Funknetzwerks des Mobilfunkanbieters übertragen. Somit kann die Vorrichtung einen funkzellenbasierten Zugang, beispielsweise einen sogenannten E-UTRAN, ersetzen.

In einer weiteren Ausführungsform stellt der IMS-Controller eine Call-Session-Control-Funktion bereit. Dies bedeutet, dass die Funktion mittels des IMS-Controllers aus- oder durchführbar ist. Hierbei kann insbesondere eine Authentifizierung des Endgeräts durchgeführt werden. Weiter können durch die Call-Session-Control-Funktion der Verbindungsaufbau, die Verbindungsüberwachung und der Verbindungsabbau gesteuert werden.

In einer weiteren Ausführungsform ist dem mindestens einen Endgerät eine vorbestimmte Kennung zugeordnet. Das Endgerät ist insbesondere ein drahtlos an die Vorrichtung anbindbares Endgerät. Die Kennung kann insbesondere eine sogenannte SIP-URI sein. Weiter sind mittels der Vorrichtung unter der vorbestimmten Kennung verschiedene Endgeräte betreibbar. Insbesondere können unter einer SIP-URI verschiedene SIP User Agenten betrieben werden. Dies kann bedeuten, dass Daten, die an das Endgerät mit der vorbestimmten Kennung übertragen werden, alternativ oder kumulativ an mindestens ein weiteres Endgerät übertragen werden. Mit anderen Worten können mindestens zwei Endgeräte mittels der Vorrichtung unter einer gemeinsamen Kennung betrieben werden.

Auch können Daten von einem weiteren Endgerät unter dieser vorbestimmten Kennung übertragen werden. Dies kann beispielsweise im Rahmen der Ausführung der Call-Session-Control-Funktion erfolgen. Insbesondere können hierzunative Fähigkeiten der Call-Session-Control-Funktion des IMS-Controllers genutzt werden. Auch ist vorstellbar, dass Teile der Daten, die an das Endgerät mit der vorbestimmten Kennung übertragen werden, mittels der Vorrichtung ausschließlich an dieses Endgerät übertragen werden, wobei ein weiterer Teil der Daten alternativ oder kumulativ an ein weiteres Endgerät übertragen wird. Das weitere Endgerät kann hierbei ebenfalls signal- und/oder datentechnisch mit der Vorrichtung verbunden sein. Somit ist es beispielsweise möglich, die Datenübertragung zur Audiokommunikation von dem Endgerät mit der vorbestimmten Kennung an eine Freisprecheinrichtung zu verlagern.

Hierdurch wird in vorteilhafter Weise die Einbindung verschiedener Endgeräte in die Datenübertragung ermöglicht.

In einer weiteren Ausführungsform ist die Vorrichtung zur Datenübertragung zu einer externen Einrichtung eine Vorrichtung zur drahtlosen Datenübertragung. Dies wurde vorhergehend erläutert.

In einer weiteren Ausführungsform umfasst die Vorrichtung mindestens eine Positionsbestimmungseinrichtung. Die Positionsbestimmungseinrichtung kann insbesondere als GNSS-Sensor ausgebildet sein. Die Positionsbestimmungseinrichtung ermöglicht die Bestimmung der Position der Vorrichtung in einem globalen Referenzkoordinatensystem. In Abhängigkeit dieser Position, kann/können dann die nächstliegende/n Basisstation/en zum Herstellen einer Funkverbindung mit der Vorrichtung bestimmt werden. Auch kann in Abhängigkeit der Position eine zukünftige Position bestimmt oder geschätzt werden, wobei die nächstliegende/n Basisstation/en zum Herstellen einer Funkverbindung mit der Vorrichtung in Abhängigkeit der zukünftigen Position bestimmt wird/werden. Die zukünftige Position kann auch in Abhängigkeit von fahrdynamischen Größen, z.B. einer Geschwindigkeit, eines Lenkwinkels, einer Gierrate, etc., bestimmt werden. Die fahrdynamischen Größen können vom Fahrzeug an die Vorrichtung übertragen werden.

Dann kann beispielsweise die Datenübertragung zwischen der Vorrichtung und der externen Einrichtung über ein Antennenelement der Vorrichtung oder ein mit der Vorrichtung verbundenes Antennenelement erfolgen. Das Antennenelement kann, wie nachfolgend noch näher erläutert, gemäß vorbestimmter Kriterien eingestellt und/oder aus einer Anzahl von mehreren Antennenelementen ausgewählt werden. Beispielsweise kann ein Antennenelement ausgewählt werden, welches eine Datenübertragungsrate zu der nächstliegenden Basisstation mit der höchsten Datenübertragungsrate und/oder der besten Datenübertragungsqualität ermöglicht.

Hierdurch kann in vorteilhafter Weise eine Datenübertragung zwischen der Vorrichtung und einer vorrichtungsexternen Einrichtung verbessert werden.

In einer weiteren Ausführungsform umfasst die Vorrichtung eine Freisprecheinrichtung oder stellt diese bereit. Die Freistelleinrichtung kann hierbei insbesondere mindestens eine Eingabeeinrichtung für Audiosignale und/oder mindestens eine Ausgabeeinrichtung für Audiosignale umfassen. Dies kann z.B. bedeuten, dass die Freisprecheinrichtung, die Einrichtung zur Bereitstellung eines Endgeräte-Funknetzwerkes, die Einrichtung zur Datenübertragung zu mindestens einer externen Einrichtung sowie die Steuer- und Auswerteeinrichtung in einem gemeinsamen Gehäuse angeordnet sind. Die Freisprecheinrichtung kann hierbei zur Eingabe und/oder Ausgabe von Audiosignalen für die Telefonie mit einem Endgeräte dienen, welches z.B. über das Endgeräte-Funknetzwerk mit der Vorrichtung verbunden ist. Die Freisprecheinrichtung kann ein vorrichtungsinternes Endgerät sein.

Hierdurch ergibt sich in vorteilhafter Weise, dass das Endgerät zur Bedienung nicht in der Hand gehalten werden muss.

In einer weiteren Ausführungsform umfasst die Vorrichtung mindestens eine Datenübertragungsschnittstelle zur drahtgebundenen Datenübertragung von und zu einem externen System bzw. einer externen Einrichtung. Das externe System kann insbesondere ein Kommunikationssystem sein. Das externe Kommunikationssystem kann hierbei von dem vorhergehend erläuterten Zielnetzwerk verschieden sein. Insbesondere kann das externe Kommunikationssystem ein Fahrzeugkommunikationssystem, beispielsweise ein entsprechendes Bussystem, sein. Auch ist vorstellbar, dass das externe Kommunikationssystem ein Bussystem eines Gebäudekommunikationssystems ist.

An das externe Kommunikationssystem kann mindestens ein vorrichtungsexternes Endgerät daten- und/oder signaltechnisch angebunden sein. In diesem Fall kann eine Datenübertragung von und zu dem externen Endgerät über die Datenübertragungsschnittstelle erfolgen. Das externe Endgerät kann dann z.B. durch die vorgeschlagene Vorrichtung betreibbar sein.

Beispielsweise kann eine externe Freisprecheinrichtung an das externe Kommunikationssystem angebunden sein. Die Freisprecheinrichtung kann hierbei ebenfalls zur Eingabe und/oder Ausgabe von Audiosignalen für die Telefonie mit einem Endgeräte dienen, welches z.B. über das Endgeräte-Funknetzwerk mit der Vorrichtung verbunden ist. Die Freisprecheinrichtung kann ein vorrichtungsexternes Endgerät sein.

Durch die Datenübertragungsschnittstelle ergibt sich in vorteilhafter Weise, dass vorrichtungsexterne Endgeräte in die Datenübertragung eingebunden werden können bzw. zur Ausgabe und/oder Eingabe von Daten der Datenübertragung genutzt werden können. Die Datenübertragungsschnittstelle zur Ausgabe und/oder Eingabe von Daten in einem vorrichtungsexternen Endgerät kann insbesondere zur Bereitstellung einer Bedienschnittstelle für einen Nutzer dienen. Somit kann die erläuterte Eingabe und/oder Ausgabe von Daten über vorrichtungsexterne Endgeräte zur Bedienung der Vorrichtung dienen.

Sind keine oder nicht die gewünschten vorrichtungsexternen Einrichtung über die Datenübertragungsschnittstelle mit der Vorrichtung verbindbar, so kann eine entsprechende Eingabe- und/oder Ausgabeschnittstelle über einen Webserver bereitgestellt werden, wobei der Webserver von der Vorrichtung, insbesondere der Steuer- und Auswerteeinrichtung, bereitgestellt wird. Über das Endgeräte-Funknetzwerk kann dann eine entsprechende Eingabe- und/oder Ausgabeeinrichtung mit dem Webserver verbunden werden. Beispielsweise kann ein Tablet-PC zur Ausgabe von Nachrichten und/oder zur Eingabe von Telefonnummern über das Endgeräte-Funknetzwerk an die Vorrichtung daten- und/oder signaltechnisch angebunden werden.

Die vorhergehend erläuterte Eingabe- und/oder Ausgabeschnittstelle über einen Webserver kann selbstverständlich wahlweise auch über die Datenübertragungsschnittstelle der Vorrichtung bereitgestellt werden. Dadurch kann beispielsweise ein PC über Ethernet angebunden werden.

In einer weiteren Ausführungsform umfasst die Vorrichtung eine Einrichtung zur Endgerätedetektion. Mittels der Einrichtung zur Endgerätedetektion kann detektiert werden, ob sich ein Endgerät in einem Raumbereich mit vorbestimmter Größe um die vorgeschlagene Vorrichtung herum befindet. Alternativ oder kumulativ kann das Endgerät mittels der Einrichtung zur Endgerätedetektion detektieren, dass es sich in dem Raumbereich befindet Befindet sich ein Endgerät in diesem Raumbereich, so kann dieses Endgerät von einem Sende-/Empfangsmodus, in dem Daten zur Telefonie über ein aktuell genutztes Netzwerk, beispielsweise ein Funknetzwerk, in einen Sende-/Empfangsmodus wechseln, in dem diese Daten über das von der Vorrichtung bereitgestellte Endgeräte-Funknetzwerk bzw. das vorhergehend erläuterte Zwischennetzwerk übertragen werden ("roamen"). Wird also ein kompatibles Endgerät in dem vorbestimmten Raumbereich detektiert, so kann eine Wechselbedingung erfüllt sein. Selbstverständlich kann das Wechseln noch von der Erfüllung weiterer Kriterien abhängen. Die Endgerätedetektion kann beispielsweise eine NFC-basierte Detektion, eine Bluetooth-basierte Detektion, eine Wi-Fi-basierte Detektion oder eine LTE D2D-basierte Detektion sein. Hierzu kann es notwendig sein, dass das entsprechende Endgerät das entsprechende Detektionsverfahren unterstützt.

Die Durchführung der Detektion kann hierbei von der verwendeten Technologie abhängen. Ist die Detektion eine WLAN-basierte Detektion, so kann diese z.B. gemäß so genannter Wi-Fi Aware Prozeduren durchgeführt werden. Diese Prozeduren sind beispielsweise durch die Wi-Fi Alliance spezifiziert.

Hierdurch wird in vorteilhafterweise ein Wechseln ("Roamen") des Endgeräts ermöglicht bzw. initiiert, wenn eine Verfügbarkeit des Endgeräte-Funknetzwerks sichergestellt ist.

Die Einrichtung zur Endgerätedetektion kann hierbei auch zur Detektion von weiteren Vorrichtungen und Einrichtungen dienen, die von den beschriebenen Endgeräten verschieden sind. Beispielsweise kann die Einrichtung zur Endgerätedetektion zur Detektion einer weiteren Vorrichtung zur Datenübertragung von und zu mindestens einem Endgerät dienen. Diese kann beispielsweise in einem anderen Fahrzeug oder in einem Gebäude installiert sein. Nach erfolgreicher Detektion kann eine Datenübertragung zwischen den Vorrichtungen durchgeführt werden, die beispielsweise zur Ausführung gewünschter Funktionen dient.

In einer weiteren Ausführungsform ist die Vorrichtung in einem Fahrzeug angeordnet. In diesem Fall kann die Vorrichtung mit mindestens einer Antenne des Fahrzeugs verbunden sein, wobei die Antenne des Fahrzeugs insbesondere mit der erläuterten Einrichtung zur Datenübertragung zu einer externen Einrichtung verbunden ist. Das Endgeräte-Funknetzwerk kann somit in einem Fahrzeuginnenraum bereitgestellt werden.

Weiter können Daten von der Vorrichtung zwischen einer Einrichtung des Fahrzeugs, beispielsweise einer Freisprecheinrichtung des Fahrzeugs, und der Vorrichtung übertragen werden. Weiter können Daten zwischen der Vorrichtung und weiteren Einrichtungen des Fahrzeugs, beispielsweise einer Anzeigeeinrichtung oder eine Eingabeeinrichtung, übertragen werden. Es ist somit beispielsweise vorstellbar, dass übertragene Textinformationen, wie z.B. SMS, auf einer Anzeigeeinrichtung des Fahrzeugs angezeigt werden. Auch ist vorstellbar, dass die Vorrichtung durch Eingabe über vorrichtungsexterne Eingabeeinrichtung gesteuert wird. Beispielsweise kann eine Telefonnummer über eine externe Eingabeeinrichtung eingegeben und von der Vorrichtung zum Aufbau eines Gesprächs werden.

Somit wird auch ein Fahrzeug mit einer Vorrichtung gemäß einer der in dieser Erfindung beschriebenen Ausführungsformen beschrieben.

Weiter vorgeschlagen wird ein Verfahren zur Datenübertragung von und zu mindestens einem Endgerät. Das Verfahren wird mit einer Vorrichtung gemäß einer der in dieser Offenbarung beschriebenen Ausführungsformen durchgeführt. Weiter führt die Steuer- und Auswerteeinrichtung mindestens eine Funktion eines IMS oder IMS-Controllers aus. Insbesondere führt die Steuer- und Auswerteeinrichtung eine Funktion eines SIP Proxy aus. Die Funktion kann insbesondere eine Call-Session-Control-Funktion sein.

Bei einer Datenübertragung von dem Endgerät zu einem Zielnetzwerk, beispielsweise einem Heimnetzwerk, eines Mobilfunkanbieters wird mindestens ein Datenpaket von dem Endgerät über das bereitgestellte Endgeräte-Funknetzwerk an die Vorrichtung übertragen. Die Steuer- und Auswerteeinrichtung steuert den entsprechenden Datenstrom, wobei dieser mittels der Einrichtung zur Datenübertragung an eine externe Einrichtung entweder direkt an das Zielnetzwerk oder indirekt, d.h. über weitere, nicht zu dem Zielnetzwerk zugeordnete Einrichtungen, an das Zielnetzwerk übertragen wird. Auch kann ein Endgerät, z.B. eine Freisprecheinrichtung, Daten drahtgebunden an die Vorrichtung übertragen, wobei diese Daten durch die Steuer- und Auswerteeinrichtung entsprechend den vorhergehenden Erläuterungen an das Zielnetzwerk dieses Endgeräts oder eines weiteren mit der Vorrichtung verbundenen Endgeräts übermittelt werden. Aus dem Zielnetzwerk können dann Daten an ein weiteres Endgerät übertragen werden, z.B. um die Telefonie durchzuführen.

Bei einer Übertragung von Daten von dem Zielnetzwerk an das Endgerät werden die Daten von dem Zielnetzwerk direkt an die Vorrichtung übertragen, beispielsweise über die Einrichtung zur Datenübertragung zu und von einer externen Einrichtung. Auch können Daten von dem Zielnetzwerk indirekt an die Vorrichtung übertragen werden, beispielsweise über mindestens eine Einrichtung, die einem von dem Zielnetzwerk verschiedenen Netzwerk, beispielsweise dem vorhergehend erläuterten Zwischennetzwerk, zugeordnet ist. Mittels der Steuer- und Auswerteeinrichtung wird der entsprechende Datenstrom an ein oder mehrere Endgeräte weitergeleitet.

Die Steuerung der Datenübertragung für die Telefonie kann durch die Steuer- und Auswerteeinrichtung durchgeführt werden.

In dem vorgeschlagenen Verfahren kann auch ein Endgeräte-Funknetzwerk bereitgestellt werden, welches die Durchführung des eingangs erläuterten Wi-Fi Calling ermöglicht. Insbesondere kann das Endgeräte-Funknetzwerk ein Roaming-Netzwerk oder ein Teil davon sein, wobei ein Endgerät zur Datenübertragung von einer Verbindung über ein aktuell verwendetes Netzwerk, insbesondere ein Funknetzwerk eines Mobilfunkanbieters, zu einer Verbindung über das bereitgestellte Endgeräte-Funknetzwerk wechseln kann.

Weiter kann durch die Steuer- und Auswerteeinrichtung eine Authentifizierungsfunktion des Endgerätes durchgeführt werden.

Auch kann durch die Steuer- und Auswerteeinrichtung ein sogenannter Call-Forwarding-Unconditional-Dienst bereitgestellt werden. Ein solcher Dienst ist beispielsweise in dem Dokument RFC 5359, veröffentlicht 2008, beschrieben, welches z.B. auf der Webseite http://www.rfc-base.org zur Verfügung gestellt wird. Durch die Ausführung dieses Dienstes kann eine Datenübertragung von Audiodaten an ein Endgerät, z.B. ein Mobilfunktelefon, alternativ oder kumulativ an eine Freisprecheinrichtung, die Teil der Vorrichtung ist oder mit der Vorrichtung signal- und/oder datentechnisch verbunden ist, erfolgen. Hierdurch wird eine Übertragung von Audiosignalen durch die Vorrichtung ermöglicht, ohne dass ein Endgerät in der Hand gehalten werden muss.

Mittels der mindestens einen Einrichtung zur Datenübertragung zu und von einer externen Einrichtung kann eine Datenübertragung über verschiedene Heimnetzwerken verschiedener Mobilfunkanbieter erfolgen. Hierzu kann eine Verbindung von der Einrichtung zur Datenübertragung und einer Basisstation des entsprechenden Mobilfunkanbieters hergestellt werden. Beispielsweise kann die Datenübertragung über einen Heimnetzwerk erfolgen, welches die aktuell höchste Verfügbarkeit aufweist.

Hierzu können mehrere Einrichtungen zur Datenübertragung der Vorrichtung mit voneinander verschiedenen SIM betrieben werden. Selbstverständlich kann auch nur eine derartige Einrichtung mit voneinander verschiedenen SIM betrieben werden (Multi-Sim-Betrieb).

Durch die Vorrichtung bereitgestellte Wi-Fi-Calling-Dienste bzw. Telefonie-Funktionen sind beispielsweise in den Dokumenten IR.51, Version 2.0, 29.05.2015 und IR.92, Version 9.0, 08.04.2015 der GSM Association beschrieben.

In einer weiteren Ausführungsform werden Audiodaten an eine Freisprecheinrichtung übertragen. Die Audiodaten können Daten einer Telefonie mit einem von der Freisprecheinrichtung verschiedenen Endgerät, beispielsweise einem Mobilfunktelefon, sein. Das Endgerät kann über das WLAN-Funknetz mit der Vorrichtung verbunden sein. Diese Datenübertragung kann durch die Steuer- und Auswerteeinrichtung gesteuert werden.

Die Freisprecheinrichtung kann, wie vorhergehend erläutert, eine Freisprecheinrichtung der Vorrichtung oder eine mit der Vorrichtung signal- und/oder datentechnisch verbundene Freisprecheinrichtung sein.

Hierdurch ergibt sich in vorteilhafter Weise, dass kein Bedienen bzw. Halten des von der Freisprecheinrichtung verschiedenen Endgerätes notwendig ist.

In einer weiteren Ausführungsform wechselt das Endgerät von einer Datenübertragung über ein von dem Endgeräte-Funknetzwerk verschiedenes Funknetzwerk, z.B. eines Mobilfunkanbieters, zu einer Datenübertragung über das Endgeräte-Funknetzwerk. Selbstverständlich kann das Endgerät auch von einer Datenübertragung über das Endgeräte-Funknetzwerk zu einer Datenübertragung über das von dem Endgeräte-Funknetzwerk verschiedene Funknetzwerk wechseln. Dieses kann auch als das sogenannte Roamen bezeichnet werden. Der Wechsel kann hierbei durch einen Wechsel zwischen verschiedenen Sende-Empfangsmodi erfolgen.

Somit kann das Endgerät von einer Datenübertragung über ein von dem Zwischennetzwerk verschiedenes Funknetzwerk, z.B. das Heimnetzwerk eines Mobilfunkanbieters, zu einer Datenübertragung über das Zwischennetzwerk wechseln.

Dies ermöglicht in vorteilhafter Weise eine kontinuierliche Bereitstellung einer hohen Datenübertragungsqualität.

Insbesondere kann nach einem Wechsel zur Datenübertragung über das Endgeräte-Funknetzwerk bzw. das Zwischennetzwerk eine Anmeldung und Authentifizierung des Endgeräts durch die Steuer- und Auswerteeinrichtung durchgeführt werden. Im Falle eines Wechsels zur Datenübertragung über ein externes Funknetzwerk kann eine Abmeldung des Endgeräts durchgeführt werden.

In einer weiteren Ausführungsform erfolgt die Datenübertragung von und zu der mindestens einen externen Einrichtung über mindestens ein Antennenelement, wobei das mindestens eine Antennenelement derart eingestellt und/oder ausgewählt wird, dass eine vorbestimmte, insbesondere maximale, Empfindlichkeit in Richtung einer ausgewählten Basisstation bereitgestellt wird.

Die ausgewählte Basisstation kann beispielsweise die aktuell zur Vorrichtung nächstliegende oder die zukünftig nächstliegende Basisstation sein.

Die Vorrichtung, insbesondere die Einrichtung zur Datenübertragung, kann mit einer Antenneneinrichtung signal- und/oder datentechnisch verbunden sein, wobei die Antenneneinrichtung mindestens ein Antennenelement umfasst. Hierbei kann, z.B. durch eine entsprechende Interaktion zwischen der Vorrichtung und der Antenneneinrichtung, detektiert werden, wie das mindestens eine Antennenelement eingestellt und/oder ausgewählt werden muss, um die gewünschte Empfindlichkeit bereitzustellen. Dann kann die Antenneneinrichtung entsprechend angesteuert werden.
Auch kann ein Antennenelement aus einer Anzahl von mindestens zwei Antennenelementen ausgewählt wird, welches die höchste Empfindlichkeit in Richtung der ausgewählten Basisstation aufweist.
Die Antennenelemente können hierbei Teil der vorgeschlagenen Vorrichtung sein. Alternativ können die Antennenelemente Teil einer von der Vorrichtung verschiedenen Einrichtung sein, wobei die Vorrichtung daten- und/oder signaltechnisch mit dieser externen Einrichtung verbunden ist. Die externe Einrichtung kann insbesondere eine Antenneneinrichtung eines Fahrzeugs sein.

In einer weiteren Ausführungsform wird ein Funknetzwerk zur Datenübertragung zwischen der Vorrichtung, insbesondere deren Einrichtung zur Datenübertragung von und zu einer externen Einrichtung, und einer externen Einrichtung, beispielsweise einer Basisstation, gewechselt. Auch kann die externe Einrichtung gewechselt werden zu/von der die Datenübertragung erfolgt. Beispielsweise kann von einer Übertragung über ein erstes Funknetzwerk an ein Heimnetzwerk eines ersten Mobilfunkanbieters zu einer Übertragung über ein weiteres Funknetzwerk zu dem Heimnetzwerk eines weiteren Mobilfunkanbieters gewechselt werden. Dies wurde vorhergehend bereits erläutert. Der Wechsel kann hierbei in Abhängigkeit von einer Verfügbarkeit verschiedener Funknetzwerke erfolgen. Insbesondere kann der Wechsel erfolgen, wenn die Verfügbarkeit des aktuell zur Datenübertragung verwendeten Funknetzwerkes geringer als ein gewünschtes Maß ist. Weiter beschrieben wird, dass eine zeitlich parallele Datenübertragung von und zu mehreren Endgeräten, insbesondere über das Endgeräte-Funknetzwerk erfolgt. Die zeitlich parallele Datenübertragung kann insbesondere zur Durchführung der Telefonie mit verschiedenen Endgeräten dienen. Hierdurch können mehrere Nutzer, z.B. Fahrzeuginsassen, zur gleichen Zeit telefonieren.

Es ist auch möglich, dass durch die Vorrichtung die vorhergehend erläuterten Telefonie-Funktionen zeitgleich für mehrere Endgeräte, insbesondere für mehrere Mobilfunktelefone, bereitgestellt werden. Insbesondere kann die Steuer- und Auswerteeinrichtung die Datenübertragung zur Durchführung von Telefonaten von und zu mehreren Endgeräten mit verschiedenen Kennungen, beispielsweise verschiedenen Telefonnummern, steuern.

Weiter vorgeschlagen wird ein Netzwerk zur Datenübertragung von und zu mindestens einem Endgerät, wobei zumindest ein Knoten des Netzwerks durch eine Vorrichtung gemäß einer der in dieser Offenbarung beschriebenen Ausführungsformen gebildet wird. Somit kann die Vorrichtung Teil des Zwischennetzwerks sein.

Weiter beschrieben wird, dass ein weiterer Knoten des Netzwerks durch einen vorrichtungsexternen Server bereitgestellt wird.

Das Netzwerk kann auch als Zwischennetzwerk bezeichnet werden. So erfolgt z.B. die Datenübertragung bei der Durchführung des eingangs erläuterten Wi-Fi Calling nicht unmittelbar zwischen dem Endgerät und dem Heimnetzwerk des Mobilfunkanbieters, beispielsweise über eine Internetverbindung. Vielmehr erfolgt die Datenübertragung über das Zwischennetzwerk, wobei das Zwischennetzwerk ein IMS bzw. Funktionen eines IMS bereitstellt. Das von der Vorrichtung bereitgestellte Endgeräte-Funknetzwerk kann Teil des Zwischennetzes sein. Die Datenübertragung über das Zwischennetzwerk ermöglicht in vorteilhafter Weise, dass von dem Endgerät verschiedene Einrichtungen bzw. deren Funktionen für die Durchführung von Telefonaten bereitgestellt werden können.

Das Zwischennetzwerk kann hierbei ein EPC , eine entsprechende Alternative oder ein in Zukunft ggf. zusätzlicher Nachfolger (5G) sein. Allerdings kann das Zwischennetzwerk nur einen Teil der Architektur und/oder Funktionen eines EPC oder einer entsprechenden Alternative/eines entsprechenden zukünftigen Nachfolgenetzwerks umfassen bzw. bereitstellen. Das Zwischennetzwerk kann insbesondere ein Roaming-Netzwerk sein. Dies wurde vorhergehend bereits erläutert.

Das Netzwerk kann insbesondere ein Femto-Netzwerk sein. In diesem Fall werden alle Funktionen des Zwischennetzwerks durch die Vorrichtung durchgeführt. Somit kann in diesem Fall die Vorrichtung den einzigen Knoten des Netzwerks bilden bzw. das Zwischennetzwerk bereitstellen. Insbesondere umfasst das Netzwerk in diesem Fall keinen weiteren vorrichtungsexternen Server zur Durchführung von Funktionen des Netzwerks als Knoten. In diesem Fall kann z.B. zumindest eine Instanz des vorhergehend beschriebenen vorrichtungsexternen Servers in die Vorrichtung integriert sein bzw. von dieser bereitgestellt werden, beispielsweise als Erweiterung des Gateways bzw. der Steuer- und Auswerteeinrichtung. Dies schließt jedoch nicht aus, dass eine signal- und/oder datentechnische Verbindung von dem Netzwerk zu einer Server-Einrichtung ausgebildet werden kann.

Weiter beschrieben wird, dass ein weiterer Knoten des Netzwerks durch eine weitere Vorrichtung zur Datenübertragung gemäß einer der in dieser Offenbarung beschriebenen Ausführungsformen bereitgestellt wird.

Auch beschrieben wird ein System mit mehr als einem Netzwerk gemäß einer der vorhergehend beschriebenen Ausführungsformen. Ein gemeinsamer Knoten aller Netzwerke kann z.B. durch den vorhergehend beschriebenen vorrichtungsexternen Server bereitgestellt werden. Alternativ oder kumulativ kann jedes der Netzwerke, insbesondere jedes als Femto-Netzwerk ausgebildete Netzwerk, signal- und/oder datentechnisch mit einem Heimnetzwerk eines Mobilfunkanbieters und/oder mit einer Backend-Einrichtung verbunden sein.

Die Erfindung wird anhand mehrerer Ausführungsbeispiele näher erläutert. Die Figuren zeigen:
- Fig. 1: ein schematisches Blockschaltbild einer erfindungsgemäßen Vorrichtung,
- Fig. 2: ein schematisches Blockschaltbild eines erfindungsgemäßen Netzwerks,
- Fig. 3: ein weiteres schematisches Blockschaltbild eines erfindungsgemäßen Netzwerks und
- Fig. 4: eine schematische Draufsicht auf Fahrzeuge mit einer erfindungsgemäßen Vorrichtung.

Nachfolgend bezeichnen gleiche Bezugszeichen Elemente mit gleichen oder ähnlichen technischen Merkmalen.

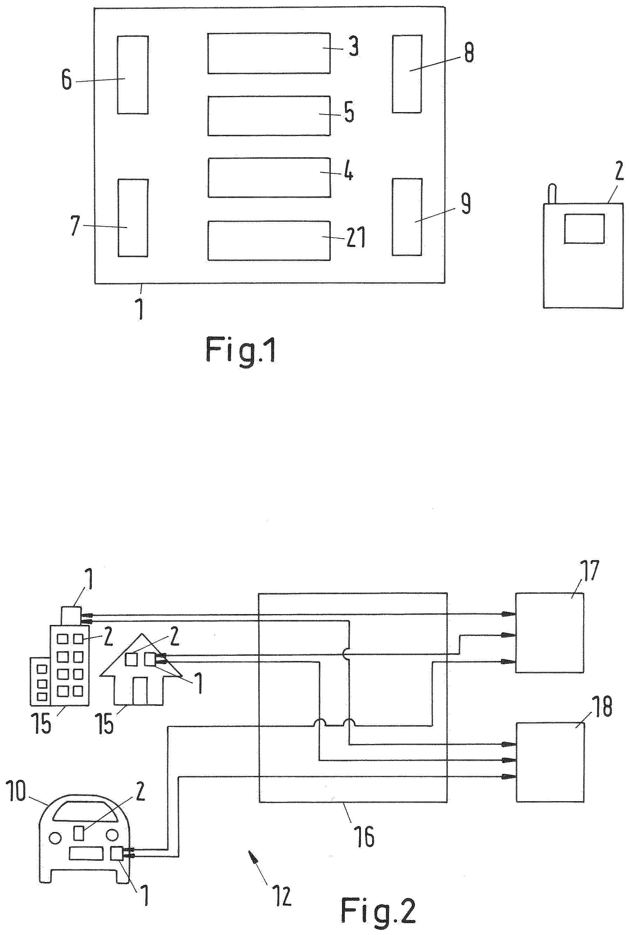

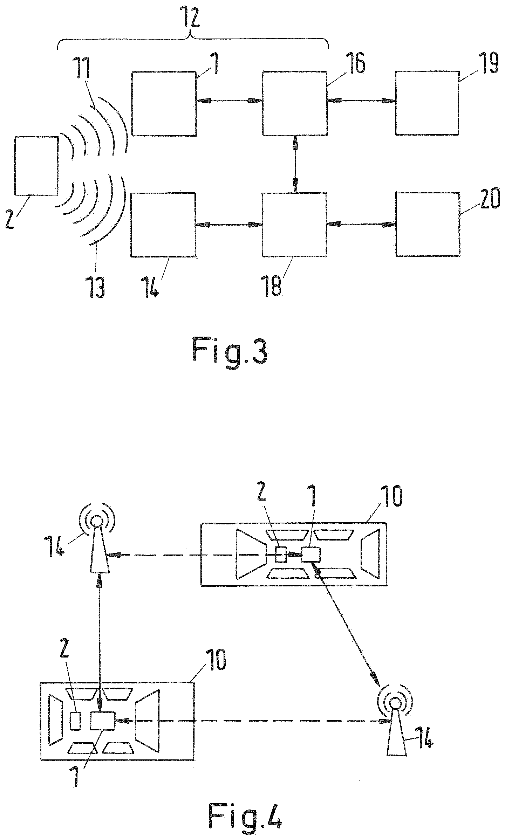

Fig. 1 zeigt ein schematisches Blockschaltbild einer Vorrichtung 1 zur Datenübertragung von und zu einem Endgerät 2, beispielsweise einem Mobilfunktelefon. Die Vorrichtung 1 umfasst eine Einrichtung 21 zur Bereitstellung eines WLAN-Funknetzwerkes 11 (siehe Fig. 3), wobei diese Einrichtung ein oder mehrere Antennenelemente zur Übertragung von Signalen über das WLAN umfasst. Weiter kann die Einrichtung 21 eine Sende-/Empfangseinrichtung umfassen, die die Datenübertragung über das WLAN-Funknetzwerk 11 steuert.

Selbstverständlich kann auch das Endgerät 2 eine Sende-/Empfangseinrichtung für WLAN-Signale umfassen.

Weiter umfasst die Vorrichtung 1 eine Einrichtung 3 zur Datenübertragung zu mindestens einer externen Einrichtung, beispielsweise einem vorrichtungsexternen Server. Die Einrichtung 3 kann insbesondere als Modem, vorzugsweise als Funkmodem, ausgebildet sein. Weiter umfasst die Vorrichtung 1 eine Steuer- und Auswerteeinrichtung 4, wobei diese als IMS-Controller ausgebildet ist oder einen solchen Controller bereitstellt. Weiter umfasst die Vorrichtung 1 eine Gateway-Einrichtung 5, die Funktionen eines so genannten Trusted WLAN Access Gateway und Trusted WLAN AAA Proxy bereitstellt. Hierdurch kann über das WLAN-Funknetzwerk 11 ein vertrauenswürdiger Zugang (trusted access) für ein Endgerät 2 bereitgestellt werden. Die Gateway-Einrichtung 5 kann hierbei von der Steuer- und Auswerteeinrichtung 4 bereitgestellt werden. Das Vorsehen der Einrichtung 5 ist hierbei jedoch nicht zwingend.

In Fig. 1 dargestellt, jedoch nicht zwingend Teil der Vorrichtung 1, ist eine Positionsbestimmungseinrichtung 6, insbesondere eine als GNSS-Sensor ausgebildete Positionsbestimmungseinrichtung 6. Mittels dieser Positionsbestimmungseinrichtung 6 ist eine Position der Vorrichtung 1 in einem Referenzkoordinatensystem bestimmbar. Weiter kann die Vorrichtung 1 eine nicht dargestellte Speichereinrichtung umfassen. In dieser Speichereinrichtung können beispielsweise Koordinaten von Basisstationen 14 (siehe Fig. 4) bzw. Funkzellen gespeichert sein, wobei eine Datenübertragung zwischen der Vorrichtung 1 und einer Basisstation über die Einrichtung 3 zur Datenübertragung erfolgen kann. In Abhängigkeit einer mittels der Positionsbestimmungseinrichtung 6 bestimmten Position der Vorrichtung 1 kann z.B. die nächstliegende Basisstation 14 bestimmt werden. Auch kann die Position einer zukünftig nächstliegenden Basisstation 14 bestimmt werden, wobei diese eine Basisstation 14 bezeichnet, die bei Weiterfahrt des Fahrzeugs 10 in Fahrtrichtung, die voraussichtlich besten Verbindungseigenschaften, z.B. den geringsten Abstand, von diesem Fahrzeug 10 aus einer Menge von benachbarten Basisstationen 14 aufweisen wird. Dann kann ein Antennenelement des Fahrzeugs 10 oder der Vorrichtung 1 zur Herstellung einer Verbindung zu der Basisstation 14 ausgewählt werden, welches eine Datenübertragung mit einer gewünschten Datenübertragungsrate und/oder Datenübertragungsqualität ermöglicht.
Weiter kann die Vorrichtung 1 eine Freisprecheinrichtung 7 umfassen. Diese Freisprecheinrichtung 7 wiederum kann ein Mikrofon und mindestens einen Lautsprecher umfassen.

Weiter kann die Vorrichtung 1 eine Kommunikationsschnittstelle 8 zur Datenübertragung zu und von einem vorrichtungsexternen Kommunikationssystem, beispielsweise einem Fahrzeugkommunikationssystem, umfassen. Mittels der Kommunikationsschnittstelle 8 ist es möglich, Daten an das vorrichtungsexterne Kommunikationssystem und z.B. daran angebundene Teilnehmer zu übertragen. Beispielsweise kann eine weitere Freisprecheinrichtung oder eine Anzeigeeinrichtung an das externe Kommunikationssystem signal- und/oder datentechnisch angebunden sein, wobei mittels der Kommunikationsschnittstelle 8 Daten von der Vorrichtung 1 an die weitere Freisprecheinrichtung und/oder die Anzeigeeinrichtung übertragen werden können.

Weiter umfasst die Vorrichtung 1 eine Einrichtung 9 zur Endgerätedetektion. Mittels der Einrichtung 9 zur Endgerätedetektion kann die Vorrichtung 1 und/oder das Endgerät 2 detektierten, ob sich ein Endgerät 2 in einem vorbestimmten räumlichen Bereich um die Vorrichtung 1 herumbefindet, insbesondere ein Wi-Fi-Calling-fähiges Endgerät 2. Beispielsweise kann die Einrichtung 9 eine Endgerätedetektion über NFC (Near Field Communication) oder Bluetooth™ ermöglichen. Die in Fig. 1 dargestellte Vorrichtung 1 kann insbesondere in einem Fahrzeug 10 angeordnet sein. Hierbei kann das WLAN-Funknetzwerk 11 in einem Fahrzeuginnenraum bereitgestellt werden.

Mittels der Vorrichtung 1 ist ein WLAN-Funknetzwerk 11 bereitstellbar, welches Teil eines Netzwerkes 12 (siehe Fig. 2) zur Datenübertragung sein kann. Das Endgerät 2 kann von einem Sende-/Empfangsmodus, in dem eine Datenübertragung über ein Funknetzwerk 13 eines Mobilfunkanbieters, beispielsweise ein LTE-Funknetzwerk, an eine Basisstation 14, die auch als Funkzelle bezeichnet werden kann, erfolgt, in einen Sende-/Empfangsmodus wechseln, in dem die Datenübertragung über das WLAN-Funknetzwerk 11 erfolgt.

Die Datenübertragung dient hierbei der Durchführung eines Wi-Fi Calling. Hierbei erfolgt die Datenübertragung zur Durchführung von Telefonie, insbesondere IP-Telefonie.

Hierbei führt die Steuer- und Auswerteeinrichtung Funktionen eines IMS aus, insbesondere eine Call-Session-Control-Funktion. Dies kann bedeuten, dass die Steuer- und Auswerteeinrichtung 4 eine Authentifizierung und Autorisierung des Endgerätes 2 durchführt, wenn dieses in den Sende-/Empfangsmodus mit einer Datenübertragung über das WLAN-Funknetzwerk 11 wechselt. Weiter kann die Steuer- und Auswerteeinrichtung 4 einen Verbindungsauf- und -abbau einer Verbindung zur Datenübertragung zwischen dem Endgerät 2 und z.B. einem weiteren Endgerät (nicht dargestellt) steuern.

Z.B. kann dem Endgerät 2 eine vorbestimmte Kennung, insbesondere eine sogenannte SIP-URI, zugeordnet sein. Mittels der Vorrichtung 1 kann das Endgerät 2 und die Freisprecheinrichtung 7 unter der vorbestimmten Kennung betrieben werden. Werden in einer Verbindung zwischen dem Endgerät 2 und einem weiteren Endgerät über die Vorrichtung 1 beispielsweise Audiodaten von dem weiteren Endgerät an das Endgerät 2 übertragen, so können diese Audiodaten anstelle an das Endgerät 2 an die Freisprecheinrichtung 7 übertragen und von dieser ausgegeben werden.

Ist keine Freisprecheinrichtung 7 als Teil der Vorrichtung 1 vorhanden, sondern über die Kommunikationsschnittstelle 8 an die Vorrichtung 1 angeschlossen, so können die Audiodaten über die Kommunikationsschnittstelle 8 an die (nicht dargestellte) Freisprecheinrichtung übertragen und von dieser ausgegeben werden.

In Fig. 2 ist ein schematisches Blockschaltbild eines Netzwerkes 12 zur Datenübertragung von und zu mindestens einem Endgerät 2 dargestellt. Dargestellt ist ein Fahrzeug 10, in dem eine Vorrichtung 1 entsprechend der in Fig. 1 dargestellten Ausführungsform angeordnet ist. Ebenfalls dargestellt sind Gebäude 15, in denen jeweils entsprechende Vorrichtung 1 angeordnet ist.

Weiter dargestellt sind verschiedene Endgeräte 2. Die Vorrichtungen 1 zur Datenübertragung bilden hierbei Knoten eines Netzwerkes 12, welches auch als Zwischennetzwerk bezeichnet werden kann. Das Zwischennetzwerk 12 kann beispielsweise neben den Vorrichtungen 1 einen Server 16 umfassen, der ebenfalls einen Knoten des Netzwerks 12 bildet. Das Zwischennetzwerk 12 kann eine reduzierte EPC Architektur aufweisen. Hierbei kann das Zwischennetzwerk 12 eine oder mehrere der folgenden Elemente umfassen: PDN Gateway, vPCRF, 3gpp AAA Proxy, TRF, P-CSCF, IBCF, MGCF. Folgende Elemente sind beispielsweise nicht zwingend Teil des Zwischennetzwerks 12: Serving Gateway, S-CSCF, HSS. Somit sind die Vorrichtungen 1 Teil des Zwischennetzwerks 12.

Sowohl die Vorrichtung 1 als auch der Server 16 können jeweils Elemente des Zwischennetzwerks 12 umfassen. In diesem Fall kann der Server 16 insbesondere Elemente umfassen, die zur Durchführung von Funktionen in jedem von mehreren Zwischennetzwerken 12 dienen. Weiter kann die Vorrichtung 1 Elemente umfassen, die zur Durchführung von vorrichtungsspezifischen Funktionen dienen.

Das Zwischennetzwerk 12 kann aber auch ein sogenanntes Femto-Netzwerk sein. In diesem Fall werden alle Funktionen des Zwischennetzwerks durch die Vorrichtung 1 durchgeführt. Auch kann die Vorrichtung 1 alle vorhergehend erläuterten Elemente des Zwischennetzwerks 12 umfassen. In diesem Fall stellt also die Vorrichtung 1 ein Zwischennetzwerk 12 bereit.

Die im Fahrzeug 10 angeordnete Vorrichtung 1 kann eine Datenübertragung zwischen der Vorrichtung 1 und dem Server 16 beispielsweise über eine LTE-Verbindung durchführen, insbesondere mittels eines Funkmodems, welches die in Fig. 1 dargestellte Einrichtung 3 zur Datenübertragung ausbilden kann. Hierzu kann das Netzwerk eines Mobilfunkanbieters genutzt werden, wobei das Netzwerk des Mobilfunkanbieters als Medium zur Datenübertragung genutzt wird.

Von dem Server 16 können diese Daten dann an ein virtuelles Netzwerk 17 oder an ein Heimnetzwerk 18 eines Mobilfunkanbieters weitergeleitet werden.

Das Zwischennetzwerk 12 ist insbesondere ein Roaming-Netzwerk. Dieses kann insbesondere Funktionen bereitstellen und/oder ausführen, die zumindest teilweise oder vollständig von ein Heimnetzwerk 18, welches z.B. von einem Mobilfunkanbieter bereitgestellt wird, ausgeführt oder bereitgestellt werden. Derartige Funktionen können insbesondere Telefonie-Funktionen sein.

Ist das Zwischennetzwerk 12 ein Femto-Netzwerk, so ist die Datenübertragung zu dem Server 16 nicht zwingend notwendig, da dieser nicht zur Durchführung von Funktionen benötigt wird. Allerdings kann in diesem Fall eine Datenübertragung zwischen der Vorrichtung 1 und einem nachfolgenden noch näher erläuterten Backend 19 (siehe Fig. 3) und/oder dem Heimnetzwerk 18, beispielsweise über eine LTE-Verbindung, durchgeführt werden, insbesondere mittels eines Funkmodems, welches die in Fig. 1 dargestellte Einrichtung 3 zur Datenübertragung ausbilden kann.
Von den in den Gebäuden 15 angeordneten Vorrichtungen 1 kann eine Datenübertragung ebenfalls über eine LTE-Verbindung oder über eine DSL-Verbindung an den Server 16 erfolgen. In diesem Fall kann die Einrichtung 3 auch als DSL-Modem ausgebildet sein. Wie vorhergehend erläutert, kann der Server 16 die Daten an ein virtuelles Netzwerk 17 oder das Heimnetzwerk 18 eines Mobilfunkanbieters weiterleiten. Ein virtuelles Netzwerk 17 kann das Netzwerk eines so genannten virtuellen Netzbetreibers (mobile virtual network operator) bezeichnen. Diese nutzen die Infrastruktur eines existierenden Mobilfunkanbieters, der auch als Mobilfunknetzbetreiber bezeichnet werden kann.

In diesem Zwischennetzwerk können verschiedene gewünschte Funktionen bzw. Anwendungen durchgeführt werden, insbesondere zur Durchführung von Wi-Fi-Calling bzw. der vorhergehend erläuterten Telefonie.

In Fig. 3 ist ein schematisches Blockschaltbild eines erfindungsgemäßen Netzwerkes 12 dargestellt.

Dargestellt ist ein Endgerät 2, welches über ein Funknetzwerk 13 mit einer Basisstation 14 verbindbar ist. Die Basisstation 14 kann zur physikalischen Anbindung eines Heimnetzwerkes 18 eines Mobilfunkanbieters dienen. Dieses Heimnetzwerk kann eine EPC-Architektur aufweisen. Weiter kann das Heimnetzwerk 18 ein IMS ausbilden bzw. dessen Funktionalitäten bereitstellen. Dieses IMS kann signal- und/oder datentechnisch mit einem sogenannten Backend verbunden sein, welches symbolisch durch einen Block 20 dargestellt ist. Ein solches Backend 20 wird nachfolgend noch näher beschrieben. Auch ist vorstellbar, dass das Heimnetzwerk 18 eine Schnittstelle für ein über ein Wi-Fi-Netzwerk übertragenes Datensignal aufweist.

Weiter ist das Endgerät 2 über das von einer Vorrichtung 1 bereitgestellte WLAN-Funknetzwerk 11 und über ein Zwischennetzwerk 12 mit dem Heimnetzwerk 18 verbindbar. Die Funktionalitäten zur Durchführung des Wi-Fi Calling können hierbei in dem oder durch das Zwischennetzwerk 12 bereitgestellt werden. Das Endgerät 2 kann hierbei von einem Sende-/Empfangsbetrieb, in dem eine Datenübertragung über das Funknetzwerk 13 zur Basisstation 14 erfolgt, in einen Sende-/Empfangsbetrieb wechseln, in dem eine Datenübertragung über das WLAN-Funknetzwerk 11 an die Vorrichtung 1 erfolgt. Dies kann insbesondere dann erfolgen, wenn mittels der in Fig. 1 dargestellten Einrichtung 9 zur Endgerätedetektion ein Wi-Fi-Calling-fähiges Endgerät 2 in der räumlichen Nähe der Vorrichtung 1 detektiert wird.

Auch das Zwischennetzwerk 12 bildet ein IMS oder ein reduziertes IMS aus bzw. stellt dessen Funktionalitäten bereit. Dieses IMS oder reduziertes IMS kann signal- und/oder datentechnisch mit einem sogenannten Backend verbunden sein, welches symbolisch durch einen Block 19 dargestellt ist. Ein Backend kann hierbei ein oder mehrere Server-Einrichtungen umfassen.

Durch das Backend 19 können weitere zentrale Dienste bzw. Serverfunktionen bereitgestellt werden. Das Backend 19 kann beispielsweise zur Sammlung, Auswertung und Aufbereitung von Daten inkl. Speicherung der Ergebnisse dienen, wobei die Daten vom Zwischennetzwerk 12 übertragen werden. Die bereitgestellten Dienste können unter anderem auf diese Ergebnisse zurückgreifen und zur übergreifenden Koordination von Aktionen innerhalb eines Zwischennetzwerkes 12 oder innerhalb mehrerer Zwischennetzwerken 12, beispielsweise bei Femto-Netzwerken, dienen.

Das Zwischennetzwerk 12 kann insbesondere ein Roaming-Netzwerk sein.

Für einen Benutzer des Endgerätes 2 ergibt sich in vorteilhafter Weise, dass die gleiche Telefonnummer und die gleiche Funktionalität wie bei einer Datenübertagung über das Funknetzwerk 13 an die Basisstation 14 bereitgestellt wird. Weiter ergibt sich in vorteilhafter Weise, dass weitere, vom Endgerät 2 verschiedene Einrichtungen in einer Umgebung, beispielsweise die vorhergehend erläuterte Freisprecheinrichtung 7 oder ein Anzeigeeinrichtung, in die Datenübertragung eingebunden werden können.

Die bereitgestellte Wi-Fi-Calling-Funktionalität kann hierbei existierende Standards, beispielsweise Standards von VoWiFi nutzen. Weiter ermöglicht die vorgeschlagene Vorrichtung 1 auch den Betrieb für Endgeräte 2 verschiedener Benutzer. Auch kann die Vorrichtung 1 den Betrieb mit verschiedenen Mobilfunkanbietern ermöglichen.

In Fig. 4 ist eine schematische Draufsicht auf Fahrzeuge 10 mit einer erfindungsgemäßen Vorrichtung 1 dargestellt. Diese ermöglichen, wie vorhergehend erläutert, die Anbindung von Endgeräten 2. Weiter dargestellt sind Basisstationen 14. Die Vorrichtungen 1 können hierbei in eine existierende Telematics Control Unit der Fahrzeuge 10 integriert werden. Auch können die Vorrichtungen 1, insbesondere die Einrichtung 3 zur Datenübertragung der Vorrichtung 1 (siehe Fig. 1), mit einer Antenneneinheit (nicht dargestellt) der Fahrzeuge 10 verbunden werden. Mittels der in Fig. 1 dargestellten Positionsbestimmungseinrichtung 6 kann eine aktuelle Position der Vorrichtung 1 bestimmt werden. Weiter kann jedes Fahrzeug 10 in Abhängigkeit Position der Vorrichtung 1 die Position der aktuell nächstliegenden Basisstation 14 und, wie vorhergehend erläutert, die Position einer zukünftig nächstliegenden Basisstation 14 bestimmt werden. Dann wird ein Antennenelement oder werden mehrere Antennenelemente des Fahrzeugs 10 zur Herstellung einer Verbindung zu der Basisstation 14 derart ausgewählt und eingestellt, dass eine Empfindlichkeit in Richtung der aktuell nächstliegenden Basisstation 14 maximiert wird. Hierbei ist es möglich, dass von einer Verbindung zur aktuell nächstliegenden Basisstation 14 zu einer Verbindung zur zukünftig nächstliegenden Basisstation 14 gewechselt wird, wenn die entsprechenden Abstände gleich sind und/oder eine gewünschten Datenübertragungsrate und/oder Datenübertragungsqualität einer Verbindung zur zukünftig nächstliegenden Basisstation gewährleistet ist. Nach dem Wechsel wird ein Antennenelement oder werden mehrere Antennenelemente des Fahrzeugs 10 zur Herstellung einer Verbindung zu der Basisstation 14 derart ausgewählt und eingestellt, dass eine Empfindlichkeit in Richtung der zukünftig nächstliegenden Basisstation 14 maximiert wird.

In Fig. 4 kennzeichnet ein durchgezogener Pfeil eine Verbindung zur der jeweils aktuell nächstliegenden Basisstation 14 und ein gestrichelter Pfeil eine Verbindung zur der jeweils zukünftig nächstliegenden Basisstation 14.

### Bezugszeichenliste

- 1: Vorrichtung
- 2: Einrichtung zur Bereitstellung eines WLAN-Funknetzwerkes
- 3: Einrichtung zur Datenübertragung
- 4: Steuer- und Auswerteeinrichtung
- 5: Gateway
- 6: Positionsbestimmungseinrichtung
- 7: Freisprecheinrichtung
- 8: Kommunikationsschnittstelle
- 9: Einrichtung zur Endgerätedetektion
- 10: Fahrzeug
- 11: WLAN-Funknetzwerk
- 12: Netzwerk (Zwischen-/Roaming-Netzwerk)
- 13: Funknetzwerk
- 14: Basisstation(en)
- 15: Gebäude
- 16: Server
- 17: öffentliches Netzwerk
- 18: Heimnetzwerk
- 19: Backend des Netzwerkes
- 20: Backend des Heimnetzwerkes
- 21: Einrichtung zur Bereitstellung eines WLAN-Funknetzwerkes

## Patentansprüche

1. Vorrichtung zur Datenübertragung von und zu mindestens einem Endgerät (2), wobei die Vorrichtung (1) mindestens eine Einrichtung (2) zur Bereitstellung eines Endgeräte-Funknetzwerks (11) zur Datenübertragung zwischen dem Endgerät und der Vorrichtung umfasst, wobei die Vorrichtung (1) mindestens eine Einrichtung (3) zur Datenübertragung zu mindestens einer externen Einrichtung umfasst, wobei die Vorrichtung (1) mindestens eine Steuer- und Auswerteeinrichtung (4) umfasst, wobei die mindestens eine Steuer- und Auswerteeinrichtung (4) als IMS-Controller ausgebildet ist oder einen IMS-Controller bereitstellt, **dadurch gekennzeichnet, dass** die Vorrichtung (1) ein Zwischennetzwerk (12), welches neben der Vorrichtung keine weiteren Knoten umfasst bereitstellt, wobei das Zwischennetzwerk (12) ein Roaming-Netzwerk bildet.

2. Vorrichtung nach Anspruch 1, **dadurch gekennzeichnet, dass** der IMS-Controller eine Call-Session-Control-Funktion bereitstellt.

3. Vorrichtung nach einem der vorangegangenen Ansprüche, **dadurch gekennzeichnet, dass** dem Endgerät (2) eine vorbestimmte Kennung zugeordnet ist, wobei mittels der Vorrichtung (1) unter der vorbestimmten Kennung verschiedene Endgeräte (2) betreibbar sind.

4. Vorrichtung nach einem der vorangegangenen Ansprüche, **dadurch gekennzeichnet, dass** die Vorrichtung (1) zur Datenübertragung zu einer externen Einrichtung eine Vorrichtung zur drahtlosen Datenübertragung ist.

5. Vorrichtung nach einem der vorangegangenen Ansprüche, **dadurch gekennzeichnet, dass** die Vorrichtung (1) eine Positionsbestimmungseinrichtung (6) umfasst.

6. Vorrichtung nach einem der vorangegangenen Ansprüche, **dadurch gekennzeichnet, dass** die Vorrichtung (1) eine Freisprecheinrichtung (7) umfasst oder bereitstellt.

7. Vorrichtung nach einem der vorangegangenen Ansprüche, **dadurch gekennzeichnet, dass** die Vorrichtung (1) mindestens eine Datenübertragungsschnittstelle (8) zur drahtgebundenen Datenübertragung zu und von einem externen System umfasst.

8. Vorrichtung nach einem der vorangegangenen Ansprüche, **dadurch gekennzeichnet, dass** die Vorrichtung (1) eine Einrichtung (9) zur Endgerätedetektion umfasst.

9. Vorrichtung nach einem der vorangegangenen Ansprüche, **dadurch gekennzeichnet, dass** die Vorrichtung (1) in einem Fahrzeug (10) angeordnet ist.

10. Verfahren zur Datenübertragung von und zu mindestens einem Endgerät, wobei das Verfahren mit einer Vorrichtung (1) nach einem Ansprüche 1 bis 9 durchgeführt wird, wobei die Steuer- und Auswerteeinrichtung (4) mindestens eine Funktion eines IMS-Controllers ausführt und wobei mindestens ein Datenpaket von dem Endgerät über das bereitgestellte Endgeräte-Funknetzwerk an die Vorrichtung übertragen wird und die Steuer- und Auswerteeinrichtung den entsprechenden Datenstrom steuert, wobei dieser mittels der Einrichtung zur Datenübertragung an eine externe Einrichtung an das Zielnetzwerk übertragen wird.

11. Verfahren nach Anspruch 10, **dadurch gekennzeichnet, dass** Audiodaten an eine Freisprecheinrichtung (7) übertragen werden.

12. Verfahren nach Anspruch 10 oder 11, **dadurch gekennzeichnet, dass** das Endgerät (2) von einer Datenübertragung über ein von dem Endgeräte-Funknetzwerk (11) verschiedenes Funknetzwerk (13) zu einer Datenübertragung über das Endgeräte-Funknetzwerk oder umgekehrt wechselt.

13. Verfahren nach einem der Ansprüche 10 bis 12, **dadurch gekennzeichnet, dass** die Datenübertragung von und zu der mindestens einen externen Einrichtung über mindestens ein Antennenelement erfolgt, wobei das mindestens eine Antennenelement derart eingestellt und/oder ausgewählt wird, dass eine vorbestimmte Empfindlichkeit in Richtung einer ausgewählten Basisstation (14) bereitgestellt wird.

14. Verfahren nach einem der Ansprüche 10 bis 13, **dadurch gekennzeichnet, dass** ein Funknetzwerk (13) zur Datenübertragung zwischen der Vorrichtung und einer externen Einrichtung gewechselt wird.

15. Netzwerk zur Datenübertragung von und zu mindestens einem Endgerät (2), wobei zumindest ein Knoten des Netzwerks (12) durch eine Vorrichtung (1) gemäß einem der Ansprüche 1 bis 9 gebildet wird.

## Claims

1. Device for transferring data from and to at least one terminal (2), wherein the device (1) comprises at least one apparatus (2) for providing a terminal radio network (11) for transferring data between the terminal and the device, wherein the device (1) comprises at least one apparatus (3) for transferring data to at least one external apparatus, wherein the device (1) comprises at least one control and evaluation apparatus (4), wherein the at least one control and evaluation apparatus (4) is designed as an IMS controller or provides an IMS controller,
**characterised in that**
the device (1) provides an intermediate network (12), which, apart from the device. does not comprise any further nodes, and wherein the intermediate network (12) forms a roving network.

2. Device according to claim 1, **characterised in that** the IMS controller provides a call-session-control function.

3. Device according to any one of the preceding claims, **characterised in that** a predetermined identifier is assigned to the terminal (2), wherein, by means of the device (1), different terminals (2) can be operated under the predetermined identifier.

4. Device according to any one of the preceding claims, **characterised in that** the device (1) for transferring data to an external apparatus is a device for wireless data transfer.

5. Device according to any one of the preceding claims, **characterised in that** the device (1) comprises a position determining apparatus (6).

6. Device according to any one of the preceding claims, **characterised in that** the device (1) comprises or provides a hands-free apparatus (7).

7. Device according to any one of the preceding claims, **characterised in that** the device (1) comprises at least one data transfer interface (8) for the wireless data transfer to and from an external system.

8. Device according to any one of the preceding claims, **characterised in that** the device (1) comprises an apparatus (9) for detecting terminals.

9. Device according to any one of the preceding claims, **characterised in that** the device (1) is arranged in a motor vehicle (10).

10. Method for transferring data from and to at least one terminal, wherein the method is put into effect with a device (1) according to any one of claims 1 to 9, wherein the control and evaluation apparatus (4) performs at least one function of an IMS controller, and wherein at least one data package is transferred from the terminal, via the terminal radio network provided, to the device, and the control and evaluation apparatus controls the corresponding data flow, wherein this is transferred, by means of the apparatus for data transfer to an external apparatus, to the target network.

11. Method according to claim 10, **characterised in that** audio data is transferred to a hands-free apparatus (7).

12. Method according to claim 10 or 11, **characterised in that** the terminal (2) switches from a data transfer via a radio network (13), which is different from the terminal radio network (11), to a data transfer via the terminal radio network, or vice-versa.

13. Method according to any one of claims 10 to 12, **characterised in that** the data transfer from and to the at least one external apparatus takes place by way of at least one antenna element, wherein the at least one antenna element is adjusted and/or selected in such a way that a predetermined sensitivity is provided in the direction of a selected base station (14).

14. Method according to any one of claims 10 to 13, **characterised in that** a radio network (13) for data transfer between the device and an external apparatus switches.

15. Network for transferring data from and to at least one terminal (2), wherein at least one node of the network (12) is formed by a device (1) according to any one of claims 1 to 9.

## Revendications

1. Dispositif de transmission de données depuis et vers au moins un terminal (2), dans lequel le dispositif (1) comprend au moins un système (2) servant à fournir un réseau radio de terminaux (11) de transmission de données entre le terminal et le dispositif, dans lequel le dispositif (1) comprend au moins un système (3) de transmission de données vers au moins un système externe, dans lequel le dispositif (1) comprend au moins un système de commande et d'analyse (4), dans lequel l'au moins un système de commande et d'analyse (4) est réalisé en tant que contrôleur IMS ou fournit un contrôleur IMS,
**caractérisé en ce que**
le dispositif (1) fournit un réseau intermédiaire (12), lequel ne comprend aucun autre nœud outre le dispositif, dans lequel le réseau intermédiaire (12) forme un réseau de roaming.

2. Dispositif selon la revendication 1, **caractérisé en ce que** le contrôleur IMS fournit une fonction de Call Session Control.

3. Dispositif selon l'une quelconque des revendications précédentes, **caractérisé en ce qu'**un code prédéfini est associé au terminal (2), dans lequel différents terminaux (2) peuvent fonctionner au moyen du dispositif (1) sous le code prédéfini.

4. Dispositif selon l'une quelconque des revendications précédentes, **caractérisé en ce que** le dispositif (1) de transmission de données veis un système externe est un dispositif de transmission de données sans fil.

5. Dispositif selon l'une quelconque des revendications précédentes, **caractérisé en ce que** le dispositif (1) comprend un système de définition de position (6).

6. Dispositif selon l'une quelconque des revendications précédentes, **caractérisé en ce que** le dispositif (1) comprend ou fournit un système mains-libres (7).

7. Dispositif selon l'une quelconque des revendications précédentes, **caractérisé en ce que** le dispositif (1) comprend au moins une interface de transmission de données (8) pour la transmission de données filaire vers et depuis un système externe.

8. Dispositif selon l'une quelconque des revendications précédentes, **caractérisé en ce que** le dispositif (1) comprend un système (9) servant à la détection de terminaux.

9. Dispositif selon l'une quelconque des revendications précédentes, **caractérisé en ce que** le dispositif (1) est disposé dans un véhicule (10).

10. Procédé de transmission de données depuis et vers au moins un terminal, dans lequel le procédé est mis en œuvre avec un dispositif (1) selon l'une quelconque des revendications 1 à 9, dans lequel le système de commande et d'analyse (4) exécute au moins une fonction d'un contrôleur IMS et dans lequel au moins un paquet de données est transmis au dispositif par le terminal par l'intermédiaire du réseau radio de terminaux fourni et le système de commande et d'analyse commande le flux de données correspondant, dans lequel ce dernier est transmis au réseau cible au moyen du système de transmission de données à un système externe.

11. Procédé selon la revendication 10, **caractérisé en ce que** des données audio sont transmises à un système mains-libres (7).

12. Procédé selon la revendication 10 ou 11, **caractérisé en ce que** le terminal (2) passe depuis une transmission de données par l'intermédiaire d'un réseau radio (13) autre que le réseau radio de terminaux (11) à une transmission de données par l'intermédiaire du réseau radio de terminaux ou inversement.

13. Procédé selon l'une quelconque des revendications 10 à 12, **caractérisé en ce que** la transmission de données est effectuée depuis et vers l'au moins un système externe par l'intermédiaire d'au moins un élément d'antenne, dans lequel l'au moins un élément d'antenne est réglé et/ou choisi de telle manière qu'une sensibilité prédéfinie est fournie en direction d'une station de base (14) sélectionnée.

14. Procédé selon l'une quelconque des revendications 10 à 13, **caractérisé en ce qu'**un réseau radio (13) de transmission de données entre le dispositif et un système externe est changé.

15. Réseau servant à la transmission de données depuis et vers au moins un terminal (2), dans lequel au moins un nœud du réseau (12) est formé par un dispositif (1) selon l'une quelconque des revendications 1 à 9.
